# EUROPÄISCHE PATENTANMELDUNG

(11) **EP 1 327 573 A2**
(43) Veröffentlichungstag der Anmeldung: **16.07.2003**
(21) Anmeldenummer: 03450004.1
(22) Anmeldetag: 09.01.2003
(51) Int. Cl.: B62D 59/04, B62D 47/02, B62D 53/00

(54) **Zweiteiliges Kraftfahrzeug**

(30) Priorität: 14.01.2002 AT 1502 U
(71) Anmelder: Duschlbauer, Josef, 4240 Freistadt (AT)
(72) Erfinder: Duschlbauer, Josef, 4240 Freistadt (AT)
(74) Vertreter: Babeluk, Michael, Dipl.-Ing. Mag.

(57) **Zusammenfassung**

Das Kraftfahrzeug von Fig. 1 ist ein vierachsiger Autobus. Neben einem Fahrersitz (1) befindet sich eine Einrichtung (2) zum Anschluss an eine externe Stromquelle. Die beiden vorderen Achsen werden mit Elektromotoren (3,4) angetrieben, während die hinteren Achsen mit Elektromotoren (7,8) angetrieben werden. Die Elektromotoren (3,4) der vorderen Achsen können je nach Bedarf zu- und weggeschaltet werden. Die Stromversorgung für die Elektromotoren (3,4) der vorderen Achsen erfolgt über einen ersten Akkumulator (5). Ein weiterer Akkumulator (6) versorgt die Antriebsmotoren (7,8) der hinteren Achsen. Ein Stromaggregat (9) dient zur Versorgung der Nebenverbraucher oder als Notstromaggregat für die Antriebsmotoren (3,4;7,8) Über eine Anhängevorrichtung (10), die die Kupplung darstellt, kann die Verbindung zu einem weiteren gleichartigen Kraftfahrzeug hergestellt werden.

## Beschreibung

Die Erfindung betrifft ein zweiteiliges Kraftfahrzeug gemäß dem Oberbegriff von Patentanspruch 1.

Autobusse sind in hervorragender Weise zur Durchführung des öffentlichen Nahverkehrs, sowohl in Ballungszentren als auch im Überlandbetrieb, geeignet. Im Vergleich zu Schienenfahrzeugen sind die Anforderungen an die Infrastruktur sehr gering und es besteht eine große Flexibilität in der Routenwahl. Nachteilig bei bekannten Autobussen ist jedoch der relativ hohe Treibstoffverbrauch und der vergleichsweise hohe Personalaufwand. Für einen herkömmlichen Autobus mit einer Beförderungskapazität zwischen 50 und 100 Personen ist mit einem Eigengewicht von etwa 15 bis 18 Tonnen zu rechnen, und es wird ein Fahrer benötigt. Durch den Einsatz von Gelenkbussen kann die Beförderungskapazität erhöht werden, so dass die oben beschriebenen Nachteile etwas gemildert werden. Gelenkbusse sind jedoch im Einsatz relativ wenig flexibel, da mit solchen Autobussen im Allgemeinen nicht alle Linien bedient werden können, wobei insbesondere im innerstädtischen Bereich mit engen Kurvenradien Probleme auftreten. Außerdem sind Gelenkautobusse schwer an schwankende Kapazitätsanforderungen anpassbar, so dass es teilweise zu einer sehr geringen Auslastung der Autobusse kommt.

Ein weiterer Nachteil bekannter Gelenkautobusse besteht darin, dass im Allgemeinen nur eine Achse angetrieben ist, so dass das Fahrverhalten insbesondere im Winter unbefriedigend ist.

Aus der DE 36 16 457 C ist ein zweiteiliger Kraftfahrzeugzug bekannt, bei dem zwei Kraftfahrzeuge Heck an Heck miteinander gekoppelt werden. Ein solches System ermöglicht eine Kapazitätsanpassung an die jeweilige Nachfrage, da die einzelnen Kraftfahrzeuge auch einzeln betreibbar sind. Die bekannte Lösung ist relativ aufwendig, da jedes Kraftfahrzeug mit Lenkstangen versehen sein muss, die das Lenkgetriebe mit entsprechenden Kupplungen auf der Heckseite des Kraftfahrzeugs verbinden. Auf diese Weise wird erreicht, dass im gekoppelten Zustand der Lenkeinschlag der beiden gekoppelten Kraftfahrzeuge stets gegensinnig ist, so dass der Verbund der beiden Kraftfahrzeug manövrierbar bleibt.

Weiter muss jedes der Kraftfahrzeuge mit einem entsprechend umsteuerbaren Antrieb verbunden sein, da das jeweils hintere Fahrzeug entgegen der natürlichen Fahrtrichtung betrieben wird. Diese erforderlichen Maßnahmen sind aufwendig, erhöhen das Gewicht und die Kosten bei der Herstellung und beim Betrieb.

Außerdem ist das Fahrverhalten eines solchen Kraftfahrzeugzugs relativ unbefriedigend.

Aufgabe der vorliegenden Erfindung ist es, diese Nachteile zu vermeiden und ein zweiteiliges Kraftfahrzeug zu schaffen, das kostengünstig herstellbar und betreibbar ist, ein vorteilhaftes Fahrverhalten aufweist und flexibel an Kapazitätsschwankungen anpassbar ist.

Diese Aufgaben werden durch eine Ausführung gemäß Patentanspruch 1 erreicht. Ein großer Vorteil der erfindungsgemäßen Lösung besteht darin, dass auch im gekoppelten Zustand die einzelnen Kraftfahrzeuge in der üblichen Fahrtrichtung betrieben werden, so dass der Antrieb wesentlich vereinfacht ist. Weiters kann durch die relativ einfach herstellbare Koppelung der Lenkvorrichtung mit der Anhängekupplung ein günstiges Fahrverhalten erreicht werden, das insbesondere durch den Allradantrieb besonders verbessert wird. Eine besondere Energieeinsparung kann durch die Kombination des Antriebs mit einem Verbrennungsmotor und weitere Antriebe über Elektromotoren erreicht werden. Die Elektromotoren sind vorzugsweise nach Bedarf und automatisiert zuschaltbar, so dass nur die jeweils erforderliche Antriebsleistung zur Verfügung gestellt wird, was den Treibstoffverbrauch verringert. Der Allradantrieb wird auch bei entsprechend schlechten Fahrbahnverhältnissen eingesetzt, um die Verkehrssicherheit zu erhöhen. In einer bevorzugten Ausführungsvariante der Erfindung weist der Verbrennungsmotor nur eine Leistung von etwa 50 PS (36 kW) auf, wobei jedoch die Leistung der Elektromotoren insgesamt bis zu 200 PS (147 kW) pro Kraftfahrzeug betragen kann.

Weitere vorteilhafte Ausgestaltungen der Erfindung sind:
- die Achsen sind als Dreieckslenker mit Kardanantrieb ausgebildet;
- der Raddurchmesser ist wesentlich kleiner als herkömmlich dimensioniert;
- die Steuerung der Fahrzeuge erfolgt über zwei miteinander gekoppelte Steuerhebel, welche direkt den Antrieb der einzelnen Räder ansteuern;
- die Motoren werden einzeln, je nach Bedarf automatisiert zugeschaltet;
- der Autobus ist auf dem Dach mit einer Mehrzahl von Photovoltaikzellen ausgestattet welche zur Aufladung der Batterien dienen;
- zur Klimatisierung werden Dachflächenfenster mit selbstgesteuerter Dachbelüftung eingesetzt;
- der Autobus hat eine Anschlusseinrichtung zu einer externen Stromversorgung.

Überlandlinienbusse haben über den Tag verteilt unterschiedlich starke Belegungsgrade. In den Morgenstunden werden sie hauptsächlich von Pendlern zur Arbeitsstätte und gleichzeitig von Schülern frequentiert. Diese Personen benötigen tagsüber zum überwiegenden Teil zu unterschiedlichen Zeiten einen Rücktransport. Schüler treten die Rückfahrt üblicherweise zwischen der Mittagszeit und den frühen Nachmittagsstunden an, während Pendler die Rückfahrt in den späteren Nachmittags- und Abendstunden brauchen. Dazwischen werden die Überlandlinienbusse hauptsächlich von Fahrgästen beansprucht, die keine täglich wiederkehrenden Transportwege benötigen.

Der größte Bedarf an Transportkapazität liegt demnach in den Morgenstunden. Zu diesen Zeiten wird an den Autobus ein weiteres Fahrzeug angekoppelt. Tagsüber werden die Fahrzeuge wieder voneinander abgekoppelt und können getrennt voneinander zum Einsatz kommen oder die nicht benötigten Autobusse werden auf geeigneten Parkplätzen abgestellt. Durch die Aufteilung der Transportkapazität auf zwei Fahrzeuge wird tagsüber der nutzlose Transport von nicht belegten Beförderungskapazitäten stark verringert.

Durch die Verteilung des Antriebes auf zwei oder mehr Achsen wird es möglich, zahlreiche Bauteile des Autobusses weniger robust auszuführen als bisher üblich, wodurch insgesamt etwa 2000 kg an Eigengewicht eingespart werden können. So kann das Gewicht der einzelnen Achsen von derzeit üblicherweise etwa einer Tonne auf etwa 200 Kilogramm reduziert werden. Auch der Fahrzeugrahmen kann zarter gebaut werden, da er mehr Auflagepunkte aufweist. Damit wird der vermehrte Einsatz von Bauteilen, welche aus Aluminium gefertigt sind, ermöglicht, was wiederum eine Reduktion ihres Baugewichtes bringt. Die größte Gewichtsreduktion ergibt sich jedoch aus der Verteilung der Belegplätze auf zwei kleinere Fahrzeuge und durch das Entkoppeln dieser Fahrzeuge untertags.

Der Autobus benötigt beim Anfahren aus einer Haltestelle und bei Bergauffahrten die meiste Energie. Beim Einfahren in eine Haltestelle bzw. beim Bergabfahren ist der Energiebedarf am geringsten, teilweise kann hierbei sogar Energie zurückgewonnen werden. Es hat sich daher als zweckmäßig herausgestellt, die einzelnen Räder jeweils mit einem Elektromotor anzutreiben und den Antrieb je nach Bedarf automatisiert anzusteuern. Lediglich zur Überwindung eines kurzzeitigen Höchstantriebskraftbedarfes ist es sinnvoll, die letzte Achse des Zugfahrzeuges zusätzlich über einen Verbrennungsmotor mit Antriebsenergie auszustatten. Dieser Verbrennungsmotor kann wesentlich kleiner dimensioniert sein und weist daher ebenfalls ein geringeres Gewicht auf als herkömmliche Dieselantriebsmotoren für Autobusse. Im Vergleich zu den herkömmlichen Motoren mit etwa 200 PS (147 kW) genügt bei dem erfindungsgemäßen Autobusbus ein Dieselmotor mit etwa 50 PS (36 kW).

Ein weiterer Vorteil liegt darin, dass der Linienbus auch bei Ausfall eines der Antriebsaggregate mithilfe der übrigen weiterfahren kann.

Durch die Kombination von Elektromotoren und Verbrennungsmotor kann der Treibstoffverbrauch optimiert werden. Eine zusätzliche Verbesserung stellt hier die Verwendung von Photovoltaikzellen dar, welche auf dem Dach der Fahrzeuge angebracht sind, wobei die Zellen während des Stillstandes des Fahrzeuges zusätzlich zur Aufladung der Batterien verwendet werden.

Durch die Reduktion des Raddurchmessers wird der Kraftaufwand zur Beschleunigung verringert. Dies bedeutet insbesondere beim Anfahren aus der Haltestelle eine Einsparung an Antriebsenergie. Sobald etwa eine Geschwindigkeit von 45 km/h erreicht ist, erfolgt eine weitere Beschleunigung durch eine an die Antriebsmotoren angebrachte Variomatic. Diese wird wirksam in einem Geschwindigkeitsbereich von 45 bis 80 km/h und dient im wesentlichen außerhalb von Ortsgebieten zur Fahrzeitverkürzung.

Eine weitere Verbesserung wird dadurch erreicht, dass die Lenkung nicht über ein übliches Lenkrad mit Lenkgetriebe, sondern über zwei Steuerhebel erfolgt, welche direkt den Antrieb der einzelnen Räder je nach Energiebedarf ansteuern. Damit fällt die Notwendigkeit eines Lenkgetriebes weg, wodurch eine weitere Gewichtsreduktion möglich wird. Diese Steuerhebel sind bevorzugt dergestalt ausgeführt, dass jeder Steuerhebel bei einem Ausfall des anderen Steuerhebels die gesamte Steuerung aller Antriebsaggregate übernehmen kann.

Eine weitere Gewichtsreduktion ergibt sich aus dem Umstand, dass jedes einzelne Rad separat angetrieben wird, wodurch ein Differenzial eingespart wird.

Um zusätzlich das Gewicht einer Klimaanlage einzusparen sieht die erfindungsgemäße Vorrichtung in einer bevorzugten Ausgestaltung den Einsatz von Dachflächenfenstern mit selbstgesteuerter Dachbelüftung über Sensoren vor.

Während des Fahrzeugstillstandes werden die Stromspeicher über eine Anschlussverbindung zu einer externen Stromquelle aufgeladen.

In der Folge wird die Erfindung anhand den in den Figuren dargestellten Ausführungsbeispielen näher erläutert. Es zeigen:
- Fig. 1: eine schematische Darstellung eines erfindungsgemäßen Kraftfahrzeugs im Grundriss und
- Fig. 2: eine Zusammenstellung von zwei Kraftfahrzeugen im gekoppelten Zustand in verkleinertem Maßstab ebenfalls im Grundriss.

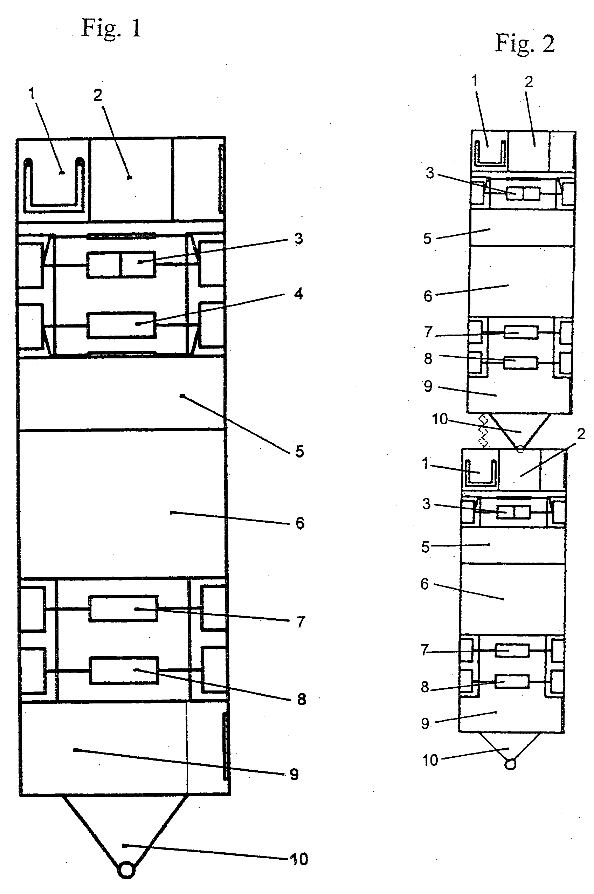

Das Kraftfahrzeug von Fig. 1 ist ein vierachsiger Autobus. Neben einem Fahrersitz 1 befindet sich eine Einrichtung 2 zum Anschluss an eine externe Stromquelle. Die beiden vorderen Achsen werden mit Elektromotoren 3, 4 angetrieben, während die hinteren Achsen mit Elektromotoren 7, 8 angetrieben werden. Die Elektromotoren 3, 4 der vorderen Achsen können je nach Bedarf zu- und weggeschaltet werden. Die Stromversorgung für die Elektromotoren 3, 4 der vorderen Achsen erfolgt über einen ersten Akkumulator 5. Ein weiterer Akkumulator 6 versorgt die Antriebsmotoren 7, 8 der hinteren Achsen. Ein Stromaggregat 9 dient zur Versorgung der Nebenverbraucher oder als Notstromaggregat für die Antriebsmotoren 3, 4;7, 8. Über eine Anhängevorrichtung 10, die die Kupplung darstellt, kann die Verbindung zu einem weiteren gleichartigen Kraftfahrzeug hergestellt werden.

Fig. 2 zeigt eine Verbindung von zwei gleichartigen Kraftfahrzeugen 11, 12, die hier als dreiachsige Kraftfahrzeuge ausgebildet sind, zum Betrieb als zweiteiliges Kraftfahrzeug.

Als zusätzlich Hilfe zur Überwindung eines kurzzeitig hohen Bedarfs an Abtriebsenergie kann die hinterste Achse zusätzlich über einen nicht dargestellten Verbrennungsmotor angetrieben werden.

## Patentansprüche

1. Zweiteiliges Kraftfahrzeug bestehend aus zwei einzelnen Kraftfahrzeugen zur Beförderung einer Vielzahl von Personen, insbesondere für den Überlandverkehr, mit mehreren Achsen und mit Antriebsaggregaten, die einzelnen Achsen zugeordnet sind, wobei die beiden Kraftfahrzeuge sowohl getrennt voneinander als auch im gekoppelten Zustand betrieben werden können, indem sie über eine Kupplung miteinander verbunden sind, **dadurch gekennzeichnet, dass** jede Achse über einen separaten Antrieb verfügt, dass die Antriebe der Achsen unabhängig voneinander betrieben werden, und dass im gekoppelten Zustand das hintere Kraftfahrzeug mit seinem Bug an das Heck des vorderen Kraftfahrzeuges angekoppelt ist.

2. Zweiteiliges Kraftfahrzeug nach Anspruch 1, **dadurch gekennzeichnet, dass** die Kupplung als hochklappbare Anhängevorrichtung ausgebildet ist.

3. Zweiteiliges Kraftfahrzeug nach einem der Ansprüche 1 oder 2, **dadurch gekennzeichnet, dass** mindestens eine Achse und zwar vorzugsweise die hinterste Achse von mindestens einem Kraftfahrzeug über einen Verbrennungsmotor angetrieben ist.

4. Zweiteiliges Kraftfahrzeug nach einem der Ansprüche 1 bis 3, **dadurch gekennzeichnet, dass** mindestens eine Achse des Kraftfahrzeugs durch einen Elektromotor angetrieben ist, der vorzugsweise automatisiert zuschaltbar ausgebildet ist.

5. Zweiteiliges Kraftfahrzeug nach Anspruch 4, **dadurch gekennzeichnet, dass** jeder Elektromotor ein einzelnes Rad antreibt.

6. Zweiteiliges Kraftfahrzeug nach einem der Ansprüche 1 bis 5, **dadurch gekennzeichnet, dass** die Achsen als Dreieckslenker mit Kardanantrieb ausgebildet sind.

7. Zweiteiliges Kraftfahrzeug nach einem der Ansprüche 1 bis 6, **dadurch gekennzeichnet, dass** am Dach des Kraftfahrzeugs Photovoltaikzellen vorgesehen sind, die zur Aufladung von Batterien dienen.

8. Zweiteiliges Kraftfahrzeug nach einem der Ansprüche 1 bis 7, **dadurch gekennzeichnet, dass** eine Anschlusseinrichtung zur Verbindung des Kraftfahrzeugs mit einer externen Stromversorgungseinrichtung vorgesehen ist.

9. Zweiteiliges Kraftfahrzeug nach einem der Ansprüche 1 bis 8, **dadurch gekennzeichnet, dass** jedes Fahrzeug einen Steuerhebel aufweist, die miteinander koppelbar sind, um die einzelnen Achsantriebe synchron zu steuern.

10. Zweiteiliges Kraftfahrzeug nach einem der Ansprüche 1 bis 9, **dadurch gekennzeichnet, dass** die einzelnen Kraftfahrzeuge baugleich ausgeführt sind.
